(19) Europäisches Patentamt / European Patent Office / Office européen des brevets

(11) **EP 4 201 607 A1**

(12) **EUROPEAN PATENT APPLICATION**

(43) Date of publication:
**28.06.2023 Bulletin 2023/26**

(21) Application number: **22201042.3**

(22) Date of filing: **12.10.2022**

(51) International Patent Classification (IPC):
**B25J 9/16** (2006.01)

(52) Cooperative Patent Classification (CPC):
**B25J 9/1676;** G05B 2219/37326; G05B 2219/40202

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2021 US 202117558605**

(71) Applicant: **Intel Corporation
Santa Clara, CA 95054 (US)**

(72) Inventors:
• **BUERKLE, Cornelius
76137 Karlsruhe (DE)**
• **GASSMANN, Bernd
75334 Straubenhardt (DE)**
• **PASCH, Frederik
76137 Karlsruhe (DE)**
• **OBORIL, Fabian
75139 Karlsruhe (DE)**

(74) Representative: **Viering, Jentschura & Partner mbB
Patent- und Rechtsanwälte
Am Brauhaus 8
01099 Dresden (DE)**

(54) **RISK-BASED ROBOT SYSTEM CONFIGURATOR**

(57) Disclosed herein are systems, devices, and methods of a system that may adapt sensing capabilities based on the risk of the situation. The system may determine a risk estimation of an object in a work environment of a robot based on sensor data and a measurement uncertainty of a sensing system configured to collect the sensor data, wherein the sensor data is indicative of the object in the work environment. The system may also, based on the risk estimation, select a next operation mode from a plurality of operation modes for the sensing system.

FIG. 1

## Description

## Technical Field

The disclosure relates generally to robot systems, and in particular, to systems, devices, and methods for configuring robot systems that may have limited resources such as battery-life.

## Background

Autonomous robots are becoming increasingly widespread in work and personal environments. To ensure safety, especially in collaborative environments where robots may share a space with humans, many robot safety systems are configured to utilize high-resolution sensors at high framerates with advanced processing to constantly monitor the safety of an environment. Such safety systems may end up consuming a large amount of resources (e.g., power) to support the sophisticated hardware and complex processing. In addition, operating the hardware at such a high operating level may strain the hardware itself (e.g., the processors, the sensors, etc.) and/or the batteries that may supply it, decreasing their overall lifetime or increasing the risk of failure. For example, even today's cameras/optical sensors may be damaged from overuse or from overheating when running for a long period of time at a high frame rate and/or high pixel resolution.

## Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary aspects of the disclosure are described with reference to the following drawings, in which:

FIG. 1 shows an example of how risk estimation may change as uncertainty increases;
FIG. 2 shows an exemplary plot of risk as a function of time for a robot operating in an environment with another object;
FIG. 3 depicts an exemplary system configurator that may adapt the system's sensing capabilities based on the determined risk;
FIG. 4 depicts an exemplary system configurator that may adapt the system's sensing capabilities based on the determined risk;
FIG. 5 shows an exemplary flow chart for a system configurator that may adapt the capabilities of the robot's sensing system based on a risk level of the measurements;
FIG. 6 illustrates an exemplary schematic drawing of a device for analyzing and improving the safety of robot-human collaborative environments; and
FIG. 7 depicts an exemplary schematic flow diagram of a method for analyzing and improving the safety of robot-human collaborative environments.

## Description

The following detailed description refers to the accompanying drawings that show, by way of illustration, exemplary details and features.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc., where "[...]" means that such a series may continue to any higher number). The phrase "at least one of' with regard to a group of elements may be used herein to mean at least one element from the group consisting of the elements. For example, the phrase "at least one of' with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc., where "[...]" means that such a series may continue to any higher number).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, *e.g.*, provided as a file, a portion of a file, a set of files, a signal or stream, a portion of a signal or stream, a set of signals or streams, and the like. Further, the term "data" may also be used to mean a reference to information, *e.g.*, in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, *e.g.*, any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint™, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (*e.g.*, the transmission of radio signals) and logical transmission (*e.g.*, the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

A "robot" may be understood to include any type of digitally controllable machine that is designed to perform a task or tasks. By way of example, a robot may be an autonomous mobile robot (AMR) that may move within an area (e.g., a manufacturing floor, an office building, a warehouse, etc.) to perform a task or tasks; or a robot may be understood as an automated machine with arms, tools, and/or sensors that may perform a task or tasks at a fixed location; or a combination thereof.

As robots become more prevalent in collaborative environments where robots may operate with or near humans, robot safety processing may become increasingly demanding in terms of resource consumption (e.g., power consumption, processing power, bandwidth usage, etc.). For example, a robot safety system may be configured to utilize high-resolution cameras at high framerates with advanced processing to constantly monitor the safety of an environment. Such safety systems may end up consuming a large amount of resources (e.g., power) to support the additional hardware and complex processing. In addition, operating the hardware at such a level may put a strain on the hardware itself (e.g., the processors, the sensors, etc.) and/or the batteries that may supply it. For example, even today's cameras/optical sensors may be damaged from overuse or from overheating when running for a long period of time at a high frame rate and/or high pixel resolution.

As should be apparent from the detailed disclosure below, the disclosed system configurator may use a risk-based approach in order to tailor the system's sensor settings and associated processing capabilities to maintain an acceptable level of risk. As a result, the disclosed system configurator may optimize resource consumption (e.g., power consumption, energy efficiency, and/or hardware wear-down) while also ensuring a predefined threshold (e.g., minimum level) of safety for the given environment. To do so, the system configurator may dynamically adapt the sensor hardware processing capacities and/or and related perception algorithms (e.g., enable/disable a high-power, high-perception three-dimensional (3D) camera system as compared to a lower-power, lower-perception two-dimensional (2D) camera system) based on a safety assessment of the environment. The system may constantly monitor the environment to determine the current risk level, and then adapt the hardware and/or associated processing to maintain an appropriate level of risk (e.g., below a threshold level) for the environment without consuming more resources than are necessary, without operating the sensors at a higher operating level than is necessary, and without processing the data with more processing power than is necessary.

By dynamically adapting the sensor hardware and/or processing, the disclosed system configurator may balance safety needs (e.g., meeting a minimum level of safety) with resource consumption, system overhead, component lifetime (e.g., by reducing wear-out of the components), etc. For example, if the current environment has few safety risks (e.g., the number of dynamic objects in the proximity of the robot is relatively small), the system configurator may set the safety system to a "light" configuration, utilizing less than the full array of available sensors, less than the full bandwidth of sensor resolution, and/or less than the full processing capabilities associated with safety-processing algorithms. For example, the system configurator may reduce the number of active sensors; may change the type or mode of a sensor to one with a lower data rate, one with a smaller dynamic range, one with a lower power consumption, etc.; and/or may reduce the processing capabilities to provide the minimum sensitivity necessary for the corresponding level of risk. As such, the sensor system may continue to provide a minimum threshold level of safety awareness without consuming more energy than is necessary, without putting a higher strain on sensor components than is necessary, etc.

To do so, the system configurator may select an operation mode based on a risk estimation associated with an object or objects in the current environment. For example, the system configurator may continuously estimate the safety risk associated with the environment (e.g., a risk that the robot may collide with an object in the environment). The risk estimation may depend on the robot's movements (e.g., velocity, acceleration, task, trajectory, etc.), its dynamic relationship to other objects in the environment, and the uncertainty of the estimated perception (e.g., measurements, processing, etc.) of the environment. The risk estimation may be based on discrete objects and obstacles in the surrounding environment or may be based on a composite risk map.

For example, for each object in the environment proximate a robot, the object may have a state $S$ with a covariance of $S_\sigma$ for the state. The system configurator may calculate the probability of a collision, $P_{collision}$, between the robot and the object based on the ego state of the robot, $S_{ego}$, and the covariance, $S_{ego_\sigma}$, associated with the ego state. Thus:

$$P_{collision} = f(S, S_\sigma, S_{ego}, S_{ego_\sigma})$$

In addition, the system configurator may determine the severity $Sev$ of a collision based on, for example, the change in velocity if the collision were to occur and a severity score based on the properties of the object, such as its class, weight, surface type, etc. As should be appreciated, the system configurator may determine the severity score based on a look-up table $sev\_lookup()$ that associates the states of the objects (and any of the object properties) to a corresponding severity score.

$$Sev_{collision} = sev\_lookup(S, S_\sigma, S_{ego}, S_{ego_\sigma}, \ldots)$$

The system configurator may then calculate the risk, $R$, of the situation by, for example, multiplying the probability of the collision with its severity:

$$R = P_{collision} * S_{collision}$$

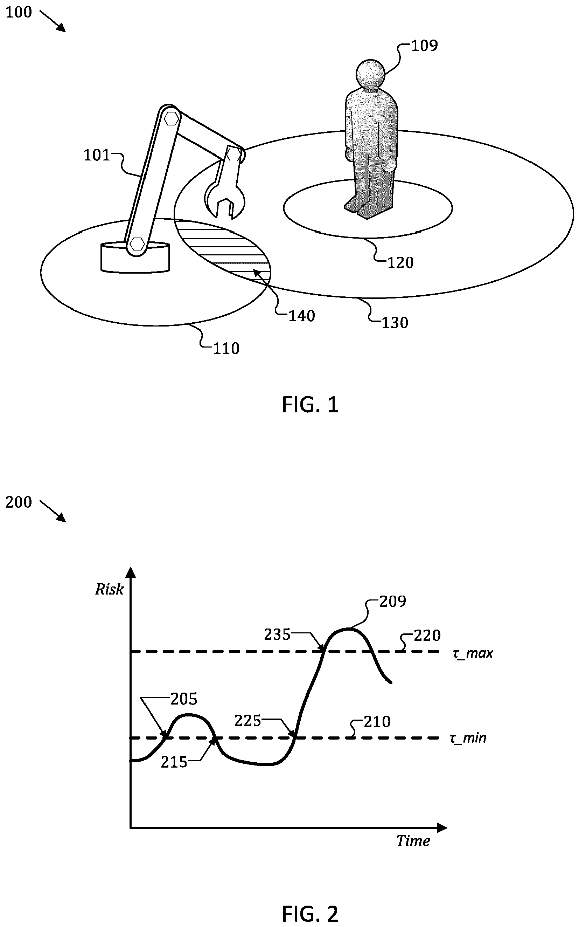

While the safety system may know the robot's planned movements with relative certainty (e.g., from the robot's planning system), the movements of other objects in the environment may be unknown/uncertain, and their uncertainty may depend on the uncertainty of the information obtained/processed about the environment. FIG. 1 illustrates an example of how risk estimation may change as uncertainty increases. For example, as shown in FIG. 1, a robot 101 may be operating in a shared environment with a human 109. Robot 101 may have a safety envelope 110 that indicates the region around the robot 101 that other objects should not enter because doing so would create a dangerous situation (e.g., there would be a risk of collision between the robot and the object). The trajectory of human 109 may be unknown/uncertain, so the robot's safety system may make observations about the human's movements in order to make predictions about the human's predicted movements (e.g., trajectory, velocity, position, etc.). If the observations and predictions are precise (e.g., they have a low covariance), the set of probable locations for the human's movement (e.g.,

the reachable set), may be relatively narrow (e.g., a smaller area), whereas if the observations and predictions are less precise (e.g., they have a higher covariance), the set of probable locations for the human's movement may be relatively broad (e.g., a wider area).

As depicted in FIG. 1, the reachable set defined by area 120 may be associated with observations/predications that have a lower covariance while the reachable set defined by area 130 may be associated with observations/predictions that have a higher covariance. As shown in FIG. 1, if the safety system were to use area 130 as the reachable set, the overlapping area 140 may indicate risk of possible collision. If the safety system were to use area 120 as the reachable set, however, there is no overlap between the robot's safety envelope 110 and the area 120, so there may be little to no risk of possible collision. Thus, the risk estimation of a situation may change as a function of the uncertainty associated with the observations/predications.

The system configurator may utilize the risk estimation of the environment to change the configuration of the associated observation/processing of sensor data associated with the robot's safety system. When the system configurator estimates the risk of a situation to be low (e.g., below a minimum risk value $\tau\_min$), the system configurator may set the system to operate with lower sensing capabilities (e.g., lower power sensors, lower processing, lower dynamic range, etc.) to avoid unnecessary processing that could waste resources. If the system configurator determines that the risk is high (e.g., above the minimum risk value $\tau\_min$), it may increase the sensing capabilities (e.g., use higher power sensors, more processing, higher dynamic range, etc.) until the risk level drops below the minimum risk value $\tau\_min$. In other words, as the system configurator increases sensing capabilities, it should lead to lower uncertainty, and if so, to a lower risk score.

This concept is depicted, for example, in plot 200 of FIG. 2. Line 209 plots risk (e.g., a risk level calculated by a system configurator) as a function of time for a robot (e.g., robot 101 of FIG. 1) operating in an environment with another object (e.g., human 109 of FIG. 1). Plot 200 also includes a minimum risk value 210 ($\tau\_min$), where if the risk level exceeds the minimum risk value 210, the system configurator may increase the sensing capabilities (e.g., use higher power sensors, higher processing, higher dynamic range settings, etc.) to render the risk with more certainty. If the risk falls back below the minimum risk value $\tau\_min$, the system configurator may decrease the sensing capabilities (e.g., use lower power sensors, lower processing, lower dynamic ranges, etc.) as long as the calculated risk level stays below the minimum risk value $\tau\_min$.

As can be seen at point 205 on line 209, for example, the risk level has slowly increased over time (e.g., moving from left to right along line 209) and has begun to exceed the minimum risk value 210. At point 205, the system configurator may increase the sensing capabilities to estimate the risk level with more certainty in hopes of lowering the risk level below the minimum risk value 210. As time continues, the estimated risk level may begin to drop as the system configurator increases the sensing capabilities. At point 215, for example, the risk level has again begun to drop below the minimum risk value 210. So, at point 215, the system configurator may correspondingly decrease the sensing capabilities to avoid wasting resources on higher-than-necessary sensing capabilities.

As time moves on, the risk level begins to increase, and at point 225, the risk again exceeds the minimum risk value 210, so the system configurator may increase the sensing capabilities to render the risk with more certainty, in hopes of lowering the risk level below the minimum risk value 210. However, it is possible that the increased sensing capabilities may not necessarily decrease the risk level, perhaps because the object is indeed nearing the robot's safety envelope. This situation is shown between point 225 and point 235, where the risk level continues to increase, despite the increased sensing capabilities that the system configurator engaged after the risk exceeded the minimum risk value 210 at point 225.

The system configurator may use a second threshold (e.g., a maximum risk value 220 ($\tau\_max$)) to determine the risk level at which the system configurator should instruct the robot to take a mitigating action to avoid the potential collision. In other words, the maximum risk value 220 may be the risk level at which the safety configurator determines the risk level is independent of the sensing capabilities and may pose an imminent collision risk. If the risk level exceeds the second threshold, for example, the system may generate a mitigating instruction to stop or modify the robot's motion (e.g., slow down, initiate an evasive maneuver, etc.) to avoid the risk or minimize the potential for a collision. As should be appreciated, the safety configurator may use any number of such thresholds to take actions based on the risk level reaching a given threshold. As should also be appreciated, the minimum risk value 210 may be at a level that is well below the maximum risk value 220 so that the safety configurator may have time to increase the sensing capabilities to sufficiently assess the risk of the environment.

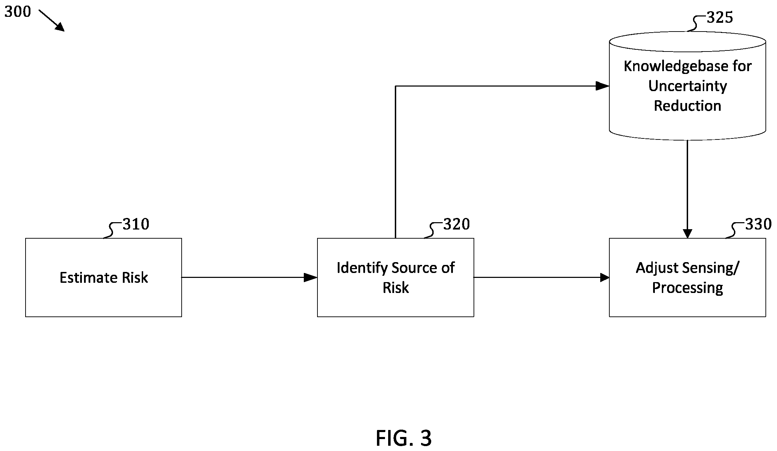

FIG. 3 shows a system configurator 300 that may adapt the system's sensing capabilities based on the determined risk. Without limitation, system configurator 300 may include any of the system configurator features discussed above, for example, with respect to FIGs. 1-2. System configurator 300 may, in 310, estimate the risk of the environment using the currently configured processing capabilities to monitor the environment and risks associated therewith. If the risk level increases, the system configurator 300 may, in 320, attempt to identify the source of the increased risk. For example, there may be high-risk regions of the risk map and/or particular objects that impose a higher risk (e.g., a fast moving object, an object with a projected trajectory that is directly in the path of the robot, etc.), and the system configurator 300 may increase sensing capabilities that are focused on these higher-risk areas. In addition, the system configurator 300 may identify the attributes of the object that may be the largest contributors to the uncertainty, and adjust sensing capabilities, in 330, that may improve the uncertainty of those contributors. For example, if measurement of the object's position or velocity has a high level of uncertainty, the system configurator 300 may, in 330, engage a higher-resolution sensor or processing (e.g., enable a light-detection and ranging (LiDAR) sensor, increase the resolution of a camera sensor, use a 3D-detection algorithm instead of a 2D-detection algorithm, increase sensor frequency, utilize Kalman filters with more complex motion model processing, enable redundant sensors, etc.) in hopes of improving the risk calculation to have a higher degree of certainty.

Safety configurator 300 may utilize, in 325, a knowledgebase that associates a variety of sensor data with sensing system configurations and an associated source of uncertainty for a given situation. The knowledgebase may be a learning model (e.g., a neural network, a deep learning network, etc.) where the safety configurator 300 may match actual sensor data for the current situation to the knowledgebase to identify which sensors or what processing to adjust to reduce the uncertainty. As should be appreciated, the safety configurator 300 may train the knowledgebase over time, as it experiences new situations and makes corresponding improvements to uncertainty. As should also be appreciated, the safety configurator 300 may store information associated with the risk level (e.g., environmental information, robot attributes, raw sensor information, risk level, information in the knowledgebase, etc.) in a memory.

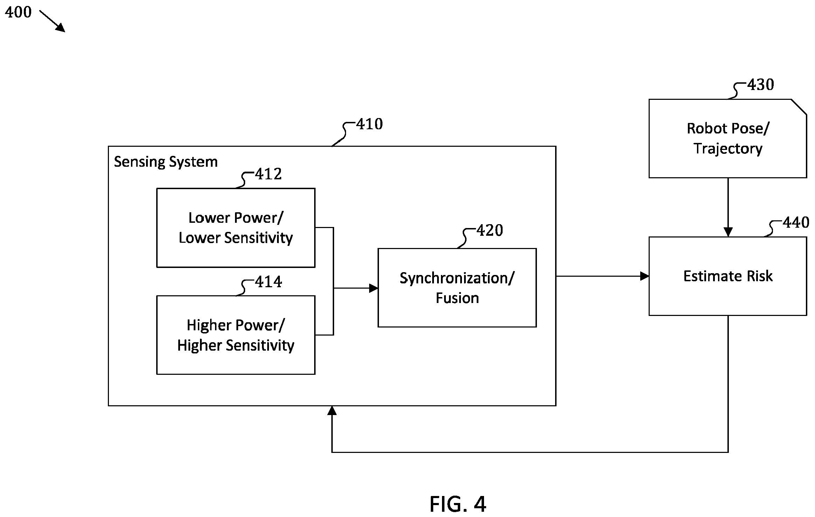

FIG. 4 shows a system configurator 400 that may adapt the capabilities of the robot's sensing system 410 based on the determined risk. Without limitation, system configurator 400 may include any of the system configurator features discussed above, for example, with respect to FIGs. 1-3. For example, the robot's sensing system 410 may include a lower power/lower sensitivity sensing system 412 (e.g., a simple, power-efficient, camera-based 2D-detector that can reliably detect objects but with low position accuracy). The robot's sensing system 410 may also include a higher power/higher sensitivity sensing system 414 (e.g., a more complex, power-hungry, LiDAR-based 3D-detector that can more accurately estimate object positions and trajectories). The sensing system 410 may enable either the lower power/lower sensitivity sensing system 412 or the higher power/higher sensitivity sensing system 414 to feed the synchronization and sensor fusion algorithms 420 for object detection and position tracking.

Based on the output from sensing system 410 and the robot's current and expected pose/trajectory 430, the system configurator 300 may then estimate the risk, in 440, and feed the estimated risk level back to the sensing system 410. Then, depending on the newly estimated risk level, the system configurator 300 may enable the lower power/lower sensitivity sensing system 412 if the estimated risk is below a predetermined minimum risk level or the higher power/higher sensitivity sensing system 412 if the risk level is above a predetermined minimum threshold. In this manner, the system configurator 300 may adapt the sensing system 410 to the needs of the environment. For example, if there are no objects nearby the robot's position (or expected to be nearby based on the expected trajectories), the system configurator 300 may use the lower power/lower sensitivity sensing system 412. As the objects move close to the robot's position, however, the system configurator 300 may enable the higher power/higher sensitivity sensing system 412.

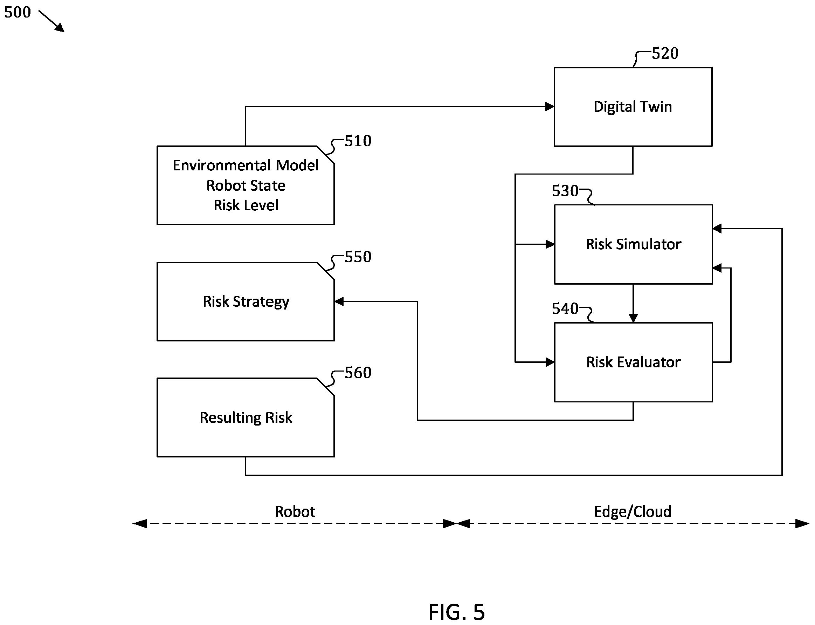

FIG. 5 shows a flow diagram for a system configurator 500 that may adapt the capabilities of the robot's sensing system based on a risk level of the measurements. Without limitation, system configurator 500 may include any of the system configurator features discussed above, for example, with respect to FIGs. 1-4. As shown in FIG. 5, the system configurator 500 may be distributed across multiple locations, including, for example, among the robot and an edge-based or cloud-based server that is remote from the robot. As should be appreciated, the distribution of processing between the robot and the edge-based server shown in FIG. 5 is merely exemplary, and any distribution may be used, including one where all the processing is located on the robot, one where all the processing is located on edge-based server(s), etc. As should also be appreciated, system configurator 500 may include receivers, transmitters, and/or transceivers for communicating information among the various processing locations.

As shown in FIG. 5, the robot may provide, in 510, the current environmental model, the current state of the robot, and the current risk level to the edge-based server, which the edge-based server may store (e.g., in a memory) as digital twin 520. The digital twin 520 may include a copy of the environmental model, the current state of the robot, and the current risk level sensor data, or it may be an anonymized version thereof that has removed any privacy-related information contained therein. The digital twin 520 (or a portion of thereof) may be provided to a risk simulator 530 and risk evaluator 540 that together may utilize the data from the digital twin 520 to simulate and evaluate different risk-related strategies for adjusting the robot's sensing capabilities to match the environmental observations, current state of the robot, and current risk level. Once the risk simulator 530 and risk evaluator 540 have arrived at a preferred risk strategy, the edge-based server may send the preferred risk strategy to the robot as preferred risk strategy 550 for adjusting the robot's sensing capabilities accordingly. The robot may adjust its sensing capabilities according to the preferred risk strategy 550, and it may determine a resulting risk 560 after making the adjustments according to the preferred risk strategy 550. The robot may provide the resulting risk 560 to the risk simulator 530 to improve its future simulations. In this sense, the risk simulator 530 may be optimized/trained based on how well the preferred risk strategy 550 adapted the sensing capabilities to arrive at the actual resulting risk 560.

As should be appreciated, the sensors used to collect the current environmental data and the current robot state used by the system configurator described above (e.g., system configurator 300, 400, and/or 500) may include any number or type of sensors that may also be distributed across any number of locations. For example, such sensors may include, as examples, a depth sensor, a camera, a radar, a light ranging and detection (LiDAR) sensor, a motion sensor, a gyroscopic sensor, an accelerometer, and/or an ultrasonic senor. In addition, the sensor(s) may be part of the robot, remote to the robot, part of the infrastructure, and/or distributed among any number of sensing locations. For example, a camera may be at a fixed location of a facility that is able to monitor the movement of objects within the facility, including robots and humans that be moving about the facility. A camera may also be part of or attached to the robot, where such a camera is able to observe the immediate environment of the robot. As should be appreciated, the system configurator may make adjustments to any of the sensors (e.g., in any location) as part of what is described above as making adjustments to the robot's sensing capabilities (e.g., as part of the risk strategy to adjust sensing capabilities based on the determined risk level). As should also be appreciated, to the extent that the system configurator may utilize receivers, transmitters, and/or transceivers to communicate information among the various processing locations, these portions of the system may also be part of the risk mitigation strategy (e.g., the system configurator may make adjustments to the bandwidth, transmit/receive power, communication channel, etc. based on the risk level).

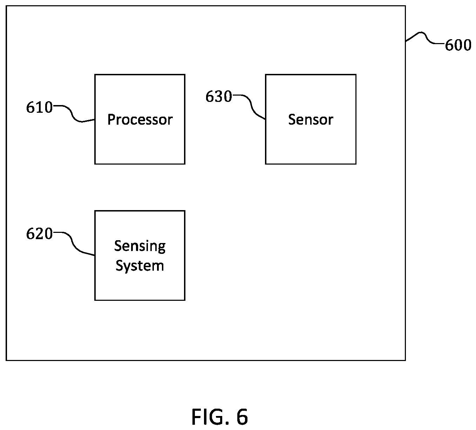

FIG. 6 is a schematic drawing illustrating a device 600 for a system configurator that may adapt the capabilities of the robot's sensing system based on the determined risk. Without limitation, device 600 may include any of the features discussed above with respect to FIGs. 1-5, safety configurator 300, safety configurator 400, and/or safety configurator 500. FIG. 6 may be implemented as a device, a system, a method, and/or a computer readable medium that, when executed, performs the features of the system configurators described above. It should be understood that device 600 is only an example, and other configurations may be possible that include, for example, different components or additional components.

Device 600 includes a processor 610. In addition to or in combination with any of the features described in this or the following paragraphs, the processor 610 is configured to determine a risk estimation of an object in a work environment of a robot based on sensor data and a first measurement uncertainty of a sensing system 620 configured to collect the sensor data, wherein the sensor data is indicative of the object in the work environment. In addition to or in combination with any of the features described in this or the following paragraphs, the processor 610 is also configured to select a next operation mode from a plurality of operation modes for the sensing system 620 based on the risk estimation.

Furthermore, in addition to or in combination with any one of the features of this and/or the preceding paragraph with respect to device 600, the plurality of operation modes may include a first operation mode associated with the first measurement uncertainty and a second operation mode associated with a second measurement uncertainty, wherein if the risk estimation is greater than or equal to a threshold level, the processor 610 may be configured to select the second operation mode as the next operation mode and if the risk estimation is less than the threshold level, the processor 610 may be configured to select the first operation mode as the next operation mode. Furthermore, in addition to or in combination with any one of the features of this and/or the preceding paragraph, the processor 610 may be configured to generate, if the risk estimation is greater than or equal to a second threshold, a mitigation instruction to modify an operational parameter of the robot based on the risk estimation. Furthermore, in addition to or in combination with any one of the features of this and/or the preceding paragraph, the mitigation instruction may include at least one of an instruction to reduce a speed of the robot, an instruction to change a trajectory of the robot, an instruction to reduce an acceleration of the robot, or an instruction to change a work task of the robot.

Furthermore, in addition to or in combination with any one of the features of this and/or the preceding two paragraphs, the sensing system 620 may be configurable among a plurality of operation modes, wherein the first measurement uncertainty may correspond to a selected operation mode of the plurality of operation modes. Furthermore, in addition to or in combination with any one of the features of this and/or the preceding two paragraphs, the risk estimation may include a collision risk of the robot with the object, wherein the processor 610 may be configured to determine the collision risk based on a planned movement of the robot with respect to the object. Furthermore, in addition to or in combination with any one of the features of this and/or the preceding two paragraphs, the first measurement uncertainty may include at least one of a positional uncertainty of a position of the object, a movement uncertainty of a movement of the object, a type uncertainty of a type of the object, or a perception uncertainty of the work environment. Furthermore, in addition to or in combination with any one of the features of this and/or the preceding two paragraphs, the object may include a moving object that has an expected trajectory within the work environment, wherein the processor 610 may be configured to determine the collision risk based on the planned movement of the robot with respect to the expected trajectory of the moving object.

Furthermore, in addition to or in combination with any one of the features of this and/or the preceding three paragraphs, the sensing system 620 may be configured to determine the expected trajectory of the object based on the sensor data. Furthermore, in addition to or in combination with any one of the features of this and/or the preceding three paragraphs, each operation mode of the plurality of operation modes may be associated with a corresponding resource consumption of the sensing system 620, wherein the processor 610 may be configured to select the next operation mode from the plurality of operation modes based on the corresponding resource consumption. Furthermore, in addition to or in combination with any one of the features of this and/or the preceding three paragraphs, the corresponding resource consumption may include at least one of power consumption, heat consumption, dynamic range, communication bandwidth, energy efficiency, component wear-down, sensor utilization, or measurement frequency. Furthermore, in addition to or in combination with any one of the features of this and/or the preceding three paragraphs, the sensing system 620 configured to collect sensor data that is indicative of the object within the work environment may include the sensing system 620 configured to track the object in the work environment from the sensor data. Furthermore, in addition to or in combination with any one of the features of this and/or the preceding three paragraphs, the sensing system 620 configured to track the object may include the sensing system 620 configured to detect the object within the work environment and to estimate a trajectory of the object based on the sensor data.

Furthermore, in addition to or in combination with any one of the features of this and/or the preceding four paragraphs, each operation mode of the plurality of operation modes may be defined by an operational parameter of the sensing system 620, wherein the processor 610 may be configured to determine a risk contribution of the operational parameter to the risk estimation, wherein the processor 610 may be configured to select the next operation mode based on the risk contribution of the operational parameter. Furthermore, in addition to or in combination with any one of the features of this and/or the preceding four paragraphs, the processor 610 configured to select the next operation mode based on the risk contribution may include the processor 610 configured to reduce below a threshold the risk contribution of the operational parameter to the risk estimation. Furthermore, in addition to or in combination with any one of the features of this and/or the preceding four paragraphs, the operational parameter may include at least one of a processing speed associated with the sensor data, a processing algorithm associated with the sensor data, a sensor resolution associated with the sensor data, a sensor type associated with the sensor data, a quantity of active sensors associated with the sensor data, a sensor quality associated with the sensor data, a frequency of sensor measurement associated with the sensor data, or a duration of sensor measurement associated with the sensor data.

Furthermore, in addition to or in combination with any one of the features of this and/or the preceding five paragraphs, the sensing system 620 may be configured to receive the sensor data from a sensor 630 including at least one of a camera, a depth sensor, a radar sensor, a light detection and ranging sensor, a infrared sensor, or an ultrasonic sensor. Furthermore, in addition to or in combination with any one of the features of this and/or the preceding five paragraphs, the device 600 may include the sensor 630. Furthermore, in addition to or in combination with any one of the features of this and/or the preceding five paragraphs, processor 610 may be configured to request, based on the risk estimation, additional resources for the sensing system 620, wherein the additional resources may include additional sensors configured to provide at least a portion of the sensor data. Furthermore, in addition to or in combination with any one of the features of this and/or the preceding five paragraphs, the processor 610 may be configured to request, based on the risk estimation, additional processing resources for the device, wherein the additional resources may include additional processing configured to determine the risk estimate, wherein the additional processing may be located on a server that is remote to the robot. Furthermore, in addition to or in combination with any one of the features of this and/or the preceding five paragraphs, the processor 610 may be configured to determine the next operation mode based on a historical risk learning model that is compared to the risk estimation and the work environment.

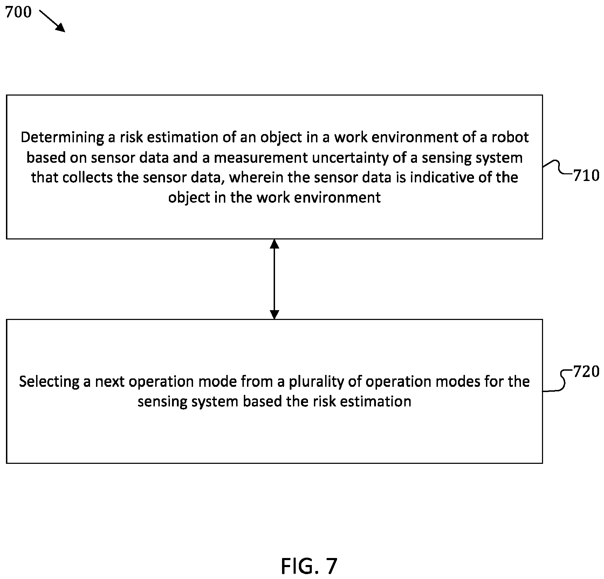

FIG. 7 depicts a schematic flow diagram of a method 700 for adapting the capabilities of the robot's sensing system based on risk. Without limitation, method 700 may implement any of the features described above with respect to FIGs. 1-6, safety configurator 300, safety configurator 400, safety configurator 500, and/or device 600.

Method 700 includes, in 710, determining a risk estimation of an object in a work environment of a robot based on sensor data and a first measurement uncertainty of a sensing system that collects the sensor data, wherein the sensor data is indicative of the object in the work environment. Method 700 also includes, in 720, selecting a next operation mode from a plurality of operation modes for the sensing system based on the risk estimation.

In the following, various examples are provided that may include one or more aspects described above with reference to safety configurator 300, safety configurator 400, safety configurator 500, device 600, and/or method 700. The examples provided in relation to the devices may apply also to the described method(s), and vice versa.

Example 1 is a device that includes a processor configured to determine a risk estimation of an object in a work environment of a robot based on sensor data and a first measurement uncertainty of a sensing system configured to collect the sensor data, wherein the sensor data is indicative of the object in the work environment. The processor is also configured to select a next operation mode from a plurality of operation modes for the sensing system based on the risk estimation.

Example 2 is the device of example 1, wherein the plurality of operation modes includes a first operation mode associated with the first measurement uncertainty and a second operation mode associated with a second measurement uncertainty, wherein if the risk estimation is greater than or equal to a threshold level, the processor is configured to select the second operation mode as the next operation mode and if the risk estimation is less than the threshold level, the processor is configured to select the first operation mode as the next operation mode.

Example 3 is the device of either of examples 1 or 2, wherein the processor is configured to generate, if the risk estimation is greater than or equal to a second threshold, a mitigation instruction to modify an operational parameter of the robot based on the risk estimation.

Example 4 is the device of example 3, wherein the mitigation instruction includes at least one of an instruction to reduce a speed of the robot, an instruction to change a trajectory of the robot, an instruction to reduce an acceleration of the robot, or an instruction to change a work task of the robot.

Example 5 is the device of any one of examples 1 to 4, wherein the sensing system is configurable among a plurality of operation modes, wherein the first measurement uncertainty corresponds to a selected operation mode of the plurality of operation modes.

Example 6 is the device of any one of examples 1 to 5, wherein the risk estimation includes a collision risk of the robot with the object, wherein the processor is configured to determine the collision risk based on a planned movement of the robot with respect to the object.

Example 7 is the device of any one of examples 1 to 6, wherein the first measurement uncertainty includes at least one of a positional uncertainty of a position of the object, a movement uncertainty of a movement of the object, a type uncertainty of a type of the object, or a perception uncertainty of the work environment.

Example 8 is the device of either examples 6 or 7, wherein the object includes a moving object that has an expected trajectory within the work environment, wherein the processor is configured to determine the collision risk based on the planned movement of the robot with respect to the expected trajectory of the moving object.

Example 9 is the device of example 8, wherein the sensing system is configured to determine the expected trajectory of the object based on the sensor data.

Example 10 is the device of any one of examples 1 to 9, wherein each operation mode of the plurality of operation modes is associated with a corresponding resource consumption of the sensing system, wherein the processor is configured to select the next operation mode from the plurality of operation modes based on the corresponding resource consumption.

Example 11 is the device of example 10, wherein the corresponding resource consumption includes at least one of power consumption, heat consumption, dynamic range, communication bandwidth, energy efficiency, component wear-down, sensor utilization, or measurement frequency.

Example 12 is the device of any one of examples 1 to 11, wherein the sensing system configured to collect sensor data that is indicative of the object within the work environment includes the sensing system configured to track the object in the work environment from the sensor data.

Example 13 is the device of example 12, wherein the sensing system configured to track the object includes the sensing system configured to detect the object within the work environment and to estimate a trajectory of the object based on the sensor data.

Example 14 is the device of any one of examples 1 to 13, wherein each operation mode of the plurality of operation modes is defined by an operational parameter of the sensing system, wherein the processor is configured to determine a risk contribution of the operational parameter to the risk estimation, wherein the processor is configured to select the next operation mode based on the risk contribution of the operational parameter.

Example 15 is the device of example 14, wherein the processor configured to select the next operation mode based on the risk contribution includes the processor configured to reduce below a threshold the risk contribution of the operational parameter to the risk estimation.

Example 16 is the device of either of examples 14 or 15, wherein the operational parameter includes at least one of a processing speed associated with the sensor data, a processing algorithm associated with the sensor data, a sensor resolution associated with the sensor data, a sensor type associated with the sensor data, a quantity of active sensors associated with the sensor data, a sensor quality associated with the sensor data, a frequency of sensor measurement associated with the sensor data, or a duration of sensor measurement associated with the sensor data.

Example 17 is the device of any one of examples 1 to 16, wherein the sensing system is configured to receive the sensor data from a sensor including at least one of a camera, a depth sensor, a radar sensor, a light detection and ranging sensor, a infrared sensor, or an ultrasonic sensor.

Example 18 is the device of example 17, wherein the device includes the sensor.

Example 19 is the device of any one of examples 1 to 18, wherein processor is configured to request, based on the risk estimation, additional resources for the sensing system, wherein the additional resources include additional sensors configured to provide at least a portion of the sensor data.

Example 20 is the device of any one of examples 1 to 19, wherein processor is configured to request, based on the risk estimation, additional processing resources for the device, wherein the additional resources include additional processing configured to determine the risk estimate, wherein the additional processing is located on a server that is remote to the robot.

Example 21 is the device of any one of examples 1 to 20, wherein the processor is configured to determine the next operation mode based on a historical risk learning model that is compared to the risk estimation and the work environment.

Example 22 is a method that includes determining a risk estimation of an object in a work environment of a robot based on sensor data and a first measurement uncertainty of a sensing system that collects the sensor data, wherein the sensor data is indicative of the object in the work environment. The method also includes selecting a next operation mode from a plurality of operation modes for the sensing system based on the risk estimation.

Example 23 is the method of example 22, wherein the plurality of operation modes includes a first operation mode associated with the first measurement uncertainty and a second operation mode associated with a second measurement uncertainty, wherein if the risk estimation is greater than or equal to a threshold level, the processor is configured to select the second operation mode as the next operation mode and if the risk estimation is less than the threshold level, the processor is configured to select the first operation mode as the next operation mode.

Example 24 is the method of either of examples 22 or 23, wherein the method includes generating, if the risk estimation is greater than or equal to a second threshold, a mitigation instruction to modify an operational parameter of the robot based on the risk estimation.

Example 25 is the method of example 24, wherein the mitigation instruction includes at least one of an instruction to reduce a speed of the robot, an instruction to change a trajectory of the robot, an instruction to reduce an acceleration of the robot, or an instruction to change a work task of the robot.

Example 26 is the method of any one of examples 22 to 25, wherein the sensing system is configurable among a plurality of operation modes, wherein the first measurement uncertainty corresponds to a selected operation mode of the plurality of operation modes.

Example 27 is the method of any one of examples 22 to 26, wherein the risk estimation includes a collision risk of the robot with the object, wherein the processor is configured to determine the collision risk based on a planned movement of the robot with respect to the object.

Example 28 is the method of any one of examples 22 to 27, wherein the first measurement uncertainty includes at least one of a positional uncertainty of a position of the object, a movement uncertainty of a movement of the object, a type uncertainty of a type of the object, or a perception uncertainty of the work environment.

Example 29 is the method of either examples 27 or 28, wherein the object includes a moving object that has an expected trajectory within the work environment, wherein the method includes determining the collision risk based on the planned movement of the robot with respect to the expected trajectory of the moving object.

Example 30 is the method of example 29, further including determining the expected trajectory of the object based on the sensor data.

Example 31 is the method of any one of examples 22 to 30, wherein each operation mode of the plurality of operation modes is associated with a corresponding resource consumption of the sensing system, wherein the method includes selecting the next operation mode from the plurality of operation modes based on the corresponding resource consumption.

Example 32 is the method of example 31, wherein the corresponding resource consumption includes at least one of power consumption, heat consumption, dynamic range, communication bandwidth, energy efficiency, component wear-down, sensor utilization, or measurement frequency.

Example 33 is the method of any one of examples 22 to 32, wherein the sensing system includes tracking the object in the work environment from the sensor data.

Example 34 is the method of example 33, wherein tracking track the object includes detecting the object within the work environment and estimating a trajectory of the object based on the sensor data.

Example 35 is the method of any one of examples 22 to 34, wherein each operation mode of the plurality of operation modes is defined by an operational parameter of the sensing system, wherein the method includes determining a risk contribution of the operational parameter to the risk estimation, wherein the method includes selecting the next operation mode based on the risk contribution of the operational parameter.

Example 36 is the method of example 35, wherein the selecting the next operation mode based on the risk contribution includes reducing below a threshold the risk contribution of the operational parameter to the risk estimation.

Example 37 is the method of either of examples 35 or 36, wherein the operational parameter includes at least one of a processing speed associated with the sensor data, a processing algorithm associated with the sensor data, a sensor resolution associated with the sensor data, a sensor type associated with the sensor data, a quantity of active sensors associated with the sensor data, a sensor quality associated with the sensor data, a frequency of sensor measurement associated with the sensor data, or a duration of sensor measurement associated with the sensor data.

Example 38 is the method of any one of examples 22 to 37, the method including receiving the sensor data from a sensor, wherein the sensor includes at least one of a camera, a depth sensor, a radar sensor, a light detection and ranging sensor, a infrared sensor, or an ultrasonic sensor.

Example 39 is the method of any one of examples 22 to 38, the method further including requesting, based on the risk estimation, additional resources for the sensing system, wherein the additional resources include additional sensors that provide at least a portion of the sensor data.

Example 40 is the method of any one of examples 22 to 39, the method further including requesting, based on the risk estimation, additional processing resources for the method, wherein the additional resources include additional processing configured to determine the risk estimate, wherein the additional processing is located on a server that is remote to the robot.

Example 41 is the method of any one of examples 22 to 40, the method further including determining the next operation mode based on a historical risk learning model that is compared to the risk estimation and the work environment.

Example 42 is a device that includes a means for determining a risk estimation of an object in a work environment of a robot based on sensor data and a first measurement uncertainty of a sensing system configured to collect the sensor data, wherein the sensor data is indicative of the object in the work environment. The device also includes a means for selecting a next operation mode from a plurality of operation modes for the sensing system based on the risk estimation.

Example 43 is the device of example 42, wherein the plurality of operation modes includes a first operation mode associated with the first measurement uncertainty and a second operation mode associated with a second measurement uncertainty, wherein the device further includes a means for selecting, if the risk estimation is greater than or equal to a threshold level, the second operation mode as the next operation mode and, if the risk estimation is less than the threshold level, the first operation mode as the next operation mode.

Example 44 is the device of either of examples 42 or 43, the device further including a means for generating, if the risk estimation is greater than or equal to a second threshold, a mitigation instruction to modify an operational parameter of the robot based on the risk estimation.

Example 45 is the device of example 44, wherein the mitigation instruction includes at least one of an instruction to reduce a speed of the robot, an instruction to change a trajectory of the robot, an instruction to reduce an acceleration of the robot, or an instruction to change a work task of the robot.

Example 46 is the device of any one of examples 42 to 45, wherein the sensing system is configurable among a plurality of operation modes, wherein the first measurement uncertainty corresponds to a selected operation mode of the plurality of operation modes.

Example 47 is the device of any one of examples 42 to 46, wherein the risk estimation includes a collision risk of the robot with the object, wherein the device further includes a means for determining the collision risk based on a planned movement of the robot with respect to the object.

Example 48 is the device of any one of examples 42 to 47, wherein the first measurement uncertainty includes at least one of a positional uncertainty of a position of the object, a movement uncertainty of a movement of the object, a type uncertainty of a type of the object, or a perception uncertainty of the work environment.

Example 49 is the device of either examples 47 or 48, wherein the object includes a moving object that has an expected trajectory within the work environment, wherein the device further includes a means for determining the collision risk based on the planned movement of the robot with respect to the expected trajectory of the moving object.

Example 50 is the device of example 49, wherein the sensing system includes a means for determining the expected trajectory of the object based on the sensor data.

Example 51 is the device of any one of examples 42 to 50, wherein each operation mode of the plurality of operation modes is associated with a corresponding resource consumption of the sensing system, wherein the device further includes a means for selecting the next operation mode from the plurality of operation modes based on the corresponding resource consumption.

Example 52 is the device of example 51, wherein the corresponding resource consumption includes at least one of power consumption, heat consumption, dynamic range, communication bandwidth, energy efficiency, component wear-down, sensor utilization, or measurement frequency.

Example 53 is the device of any one of examples 42 to 52, wherein the sensing system includes a tracking means for tracking the object in the work environment from the sensor data.

Example 54 is the device of example 53, wherein the tracking means includes a means for detecting the object within the work environment and a means for estimating a trajectory of the object based on the sensor data.

Example 55 is the device of any one of examples 42 to 54, wherein each operation mode of the plurality of operation modes is defined by an operational parameter of the sensing system, wherein the device includes a means for determining a risk contribution of the operational parameter to the risk estimation, wherein the device includes a means for selecting the next operation mode based on the risk contribution of the operational parameter.

Example 56 is the device of example 55, wherein the means for selecting the next operation mode includes a means for reducing below a threshold the risk contribution of the operational parameter to the risk estimation.

Example 57 is the device of either of examples 55 or 56, wherein the operational parameter includes at least one of a processing speed associated with the sensor data, a processing algorithm associated with the sensor data, a sensor resolution associated with the sensor data, a sensor type associated with the sensor data, a quantity of active sensors associated with the sensor data, a sensor quality associated with the sensor data, a frequency of sensor measurement associated with the sensor data, or a duration of sensor measurement associated with the sensor data.

Example 58 is the device of any one of examples 42 to 57, wherein the sensing system is configured to receive the sensor data from a sensing means for sensing, wherein the sensing means includes at least one of a camera, a depth sensor, a radar sensor, a light detection and ranging sensor, a infrared sensor, or an ultrasonic sensor.

Example 59 is the device of example 58, the device further including the sensing means.

Example 60 is the device of any one of examples 42 to 59, wherein the device includes a means for requesting, based on the risk estimation, additional resources for the sensing system, wherein the additional resources include additional sensing means for providing at least a portion of the sensor data.

Example 61 is the device of any one of examples 42 to 60, wherein the device includes a means for requesting, based on the risk estimation, additional processing resources for the device, wherein the additional resources include an additional processing means for determining the risk estimate, wherein the additional processing means is located on a server that is remote to the robot.

Example 62 is the device of any one of examples 42 to 61, wherein the device includes a means for determining the next operation mode based on a historical risk learning model that is compared to the risk estimation and the work environment.

Example 63 is a non-transitory computer readable medium, including instructions which, if executed, cause a processor to determine a risk estimation of an object in a work environment of a robot based on sensor data and a first measurement uncertainty of a sensing system configured to collect the sensor data, wherein the sensor data is indicative of the object in the work environment. The instructions are configured to cause the processor to select a next operation mode from a plurality of operation modes for the sensing system based on the risk estimation.

Example 64 is the non-transitory computer readable medium of example 63, wherein the plurality of operation modes includes a first operation mode associated with the first measurement uncertainty and a second operation mode associated with a second measurement uncertainty, wherein if the risk estimation is greater than or equal to a threshold level, the instructions are configured to cause the processor to select the second operation mode as the next operation mode and if the risk estimation is less than the threshold level, the instructions are configured to cause the processor to select the first operation mode as the next operation mode.

Example 65 is the non-transitory computer readable medium of either of examples 63 or 64, wherein the instructions are configured to cause the processor to generate, if the risk estimation is greater than or equal to a second threshold, a mitigation instruction to modify an operational parameter of the robot based on the risk estimation.

Example 66 is the non-transitory computer readable medium of example 65, wherein the mitigation instruction includes at least one of an instruction to reduce a speed of the robot, an instruction to change a trajectory of the robot, an instruction to reduce an acceleration of the robot, or an instruction to change a work task of the robot.

Example 67 is the non-transitory computer readable medium of any one of examples 63 to 66, wherein the sensing system is configurable among a plurality of operation modes, wherein the first measurement uncertainty corresponds to a selected operation mode of the plurality of operation modes.

Example 68 is the non-transitory computer readable medium of any one of examples 63 to 67, wherein the risk estimation includes a collision risk of the robot with the object, wherein the instructions are configured to cause the processor to determine the collision risk based on a planned movement of the robot with respect to the object.

Example 69 is the non-transitory computer readable medium of any one of examples 63 to 68, wherein the first measurement uncertainty includes at least one of a positional uncertainty of a position of the object, a movement uncertainty of a movement of the object, a type uncertainty of a type of the object, or a perception uncertainty of the work environment.

Example 70 is the non-transitory computer readable medium of either examples 68 or 69, wherein the object includes a moving object that has an expected trajectory within the work environment, wherein the instructions are configured to cause the processor to determine the collision risk based on the planned movement of the robot with respect to the expected trajectory of the moving object.

Example 71 is the non-transitory computer readable medium of example 70, wherein the instructions are configured to cause the sensing system to determine the expected trajectory of the object based on the sensor data.

Example 72 is the non-transitory computer readable medium of any one of examples 63 to 71, wherein each operation mode of the plurality of operation modes is associated with a corresponding resource consumption of the sensing system, wherein the instructions are configured to cause the processor to select the next operation mode from the plurality of operation modes based on the corresponding resource consumption.

Example 73 is the non-transitory computer readable medium of example 72, wherein the corresponding resource consumption includes at least one of power consumption, heat consumption, dynamic range, communication bandwidth, energy efficiency, component wear-down, sensor utilization, or measurement frequency.

Example 74 is the non-transitory computer readable medium of any one of examples 63 to 73, wherein the instructions configured to cause the sensing system to collect sensor data that is indicative of the object within the work environment includes the instructions configured to cause the sensing system to track the object in the work environment from the sensor data.

Example 75 is the non-transitory computer readable medium of example 74, wherein the instructions are configured to cause the sensing system to track the object includes the instructions configured to cause the sensing system to detect the object within the work environment and to estimate a trajectory of the object based on the sensor data.

Example 76 is the non-transitory computer readable medium of any one of examples 63 to 75, wherein each operation mode of the plurality of operation modes is defined by an operational parameter of the sensing system, wherein the instructions are configured to cause the processor to determine a risk contribution of the operational parameter to the risk estimation, wherein the instructions are configured to cause the processor to select the next operation mode based on the risk contribution of the operational parameter.

Example 77 is the non-transitory computer readable medium of example 76, wherein the instructions configured to cause the processor to select the next operation mode based on the risk contribution includes the instructions configured to cause the processor to reduce below a threshold the risk contribution of the operational parameter to the risk estimation.

Example 78 is the non-transitory computer readable medium of either of examples 76 or 77, wherein the operational parameter includes at least one of a processing speed associated with the sensor data, a processing algorithm associated with the sensor data, a sensor resolution associated with the sensor data, a sensor type associated with the sensor data, a quantity of active sensors associated with the sensor data, a sensor quality associated with the sensor data, a frequency of sensor measurement associated with the sensor data, or a duration of sensor measurement associated with the sensor data.

Example 79 is the non-transitory computer readable medium of any one of examples 63 to 78, wherein the instructions are configured to cause the sensing system to receive the sensor data from a sensor including at least one of a camera, a depth sensor, a radar sensor, a light detection and ranging sensor, a infrared sensor, or an ultrasonic sensor.

Example 80 is the non-transitory computer readable medium of example 79, wherein the non-transitory computer readable medium includes the sensor.

Example 81 is the non-transitory computer readable medium of any one of examples 63 to 80, wherein instructions are configured to cause the processor to request, based on the risk estimation, additional resources for the sensing system, wherein the additional resources include additional sensors, wherein the instructions are configured to cause the additional sensors to provide at least a portion of the sensor data.

Example 82 is the non-transitory computer readable medium of any one of examples 63 to 81, wherein the instructions are configured to cause the processor to request, based on the risk estimation, additional processing resources for the non-transitory computer readable medium, wherein the additional resources include additional processing, wherein the instructions are configured to cause the additional processing to determine the risk estimate, wherein the additional processing is located on a server that is remote to the robot.

Example 83 is the non-transitory computer readable medium of any one of examples 63 to 82, wherein the instructions are configured to cause the processor to determine the next operation mode based on a historical risk learning model that is compared to the risk estimation and the work environment.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

## Claims

1. A device comprising:
   a processor configured to:

   determine a risk estimation of an object in a work environment of a robot based on sensor data and a first measurement uncertainty of a sensing system configured to collect the sensor data, wherein the sensor data is indicative of the object in the work environment; and
   select a next operation mode from a plurality of operation modes for the sensing system based on the risk estimation.

2. The device of claim 1,

   wherein the plurality of operation modes comprises a first operation mode associated with the first measurement uncertainty and a second operation mode associated with a second measurement uncertainty, wherein if the risk estimation is greater than or equal to a threshold level, the processor is configured to select the second operation mode as the next operation mode and if the risk estimation is less than the threshold level, the processor is configured to select the first operation mode as the next operation mode;
   preferably wherein the processor is configured to generate, if the risk estimation is greater than or equal to a second threshold, a mitigation instruction to modify an operational parameter of the robot based on the risk estimation;

further preferably wherein the mitigation instruction comprises at least one of an instruction to reduce a speed of the robot, an instruction to change a trajectory of the robot, an instruction to reduce an acceleration of the robot, or an instruction to change a work task of the robot.

3. The device of any one of claims 1 or 2,
wherein the sensing system is configurable among a plurality of operation modes, wherein the first measurement uncertainty corresponds to a selected operation mode of the plurality of operation modes.

4. The device of any one of claims 1 to 3,
wherein the risk estimation comprises a collision risk of the robot with the object, wherein the processor is configured to determine the collision risk based on a planned movement of the robot with respect to the object.

5. The device of any one of claims 1 to 4,

wherein the first measurement uncertainty comprises at least one of a positional uncertainty of a position of the object, a movement uncertainty of a movement of the object, a type uncertainty of a type of the object, or a perception uncertainty of the work environment;
preferably wherein the object comprises a moving object that has an expected trajectory within the work environment, wherein the processor is configured to determine the collision risk based on the planned movement of the robot with respect to the expected trajectory of the moving object.

6. The device of claim 5,
wherein the sensing system is configured to determine the expected trajectory of the object based on the sensor data.

7. The device of any one of claims 1 to 6,

wherein each operation mode of the plurality of operation modes is associated with a corresponding resource consumption of the sensing system, wherein the processor is configured to select the next operation mode from the plurality of operation modes based on the corresponding resource consumption;
preferably wherein the corresponding resource consumption comprises at least one of power consumption, heat consumption, dynamic range, communication bandwidth, energy efficiency, component wear-down, sensor utilization, or measurement frequency.

8. An non-transitory computer readable medium, including instructions which, if executed, cause a processor to:

determine a risk estimation of an object in a work environment of a robot based on sensor data and a first measurement uncertainty of a sensing system configured to collect the sensor data, wherein the sensor data is indicative of the object in the work environment; and
select a next operation mode from a plurality of operation modes for the sensing system based on the risk estimation.

9. The non-transitory computer readable medium of claim 8,
wherein the sensing system configured to collect sensor data that is indicative of the object within the work environment comprises the sensing system configured to estimate a trajectory of the object based on the sensor data.

10. The non-transitory computer readable medium of any one of claims 8 or 9,

wherein each operation mode of the plurality of operation modes is defined by an operational parameter of the sensing system, wherein the processor is configured to determine a risk contribution of the operational parameter to the risk estimation, wherein the processor is configured to select the next operation mode based on the risk contribution of the operational parameter;
preferably wherein the processor configured to select the next operation mode based on the risk contribution comprises the processor configured to reduce below a threshold the risk contribution of the operational parameter to the risk estimation.

11. The non-transitory computer readable medium of claim 10,
wherein the operational parameter comprises at least one of a processing speed associated with the sensor data, a processing algorithm associated with the sensor data, a sensor resolution associated with the sensor data, a sensor type associated with the sensor data, a quantity of active sensors associated with the sensor data, a sensor quality associated with the sensor data, a frequency of sensor measurement associated with the sensor data, or a duration of sensor measurement associated with the sensor data.

12. The non-transitory computer readable medium of any one of claims 8 to 11,
wherein the sensing system is configured to receive the sensor data from a sensor comprising at least one of a camera, a depth sensor, a radar sensor, a light detection and ranging sensor, a infrared sensor, or an ultrasonic sensor.

13. The non-transitory computer readable medium of any one of claims 8 to 12,
wherein processor is configured to request, based on the risk estimation, additional resources for the sensing system, wherein the additional resources comprise additional sensors configured to provide at least a portion of the sensor data.

14. The non-transitory computer readable medium of any one of claims 8 to 13,
wherein processor is configured to request, based on the risk estimation, additional processing resources for the non-transitory computer readable medium, wherein the additional resources comprise additional processing configured to determine the risk estimate, wherein the additional processing is located on a server that is remote to the robot.

15. The non-transitory computer readable medium of any one of claims 8 to 14,
wherein the processor is configured to determine the next operation mode based on a historical risk learning model that is compared to the risk estimation and the work environment.

100

FIG. 1

200

FIG. 2

FIG. 3

400

### Sensing System (410)

- Lower Power / Lower Sensitivity (412)
- Higher Power / Higher Sensitivity (414)
- Synchronization / Fusion (420)

Robot Pose / Trajectory (430)

Estimate Risk (440)

**FIG. 4**

FIG. 5

FIG. 6

700

Determining a risk estimation of an object in a work environment of a robot based on sensor data and a measurement uncertainty of a sensing system that collects the sensor data, wherein the sensor data is indicative of the object in the work environment

710

Selecting a next operation mode from a plurality of operation modes for the sensing system based the risk estimation

720

FIG. 7

Europäisches Patentamt

European Patent Office

Office européen des brevets

## EUROPEAN SEARCH REPORT

Application Number

EP 22 20 1042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/193267 A1 (PENG CHENG [US] ET AL) 27 June 2019 (2019-06-27) <br> * paragraph [0001] * <br> * paragraph [0006] - paragraph [0007] * <br> * paragraph [0028] - paragraph [0051] * <br> * paragraph [0064] - paragraph [0068] * <br> * paragraph [0075] * <br> ----- | 1-6,8,9, 12-15 | INV. <br> B25J9/16 |
| X | JP 2020 192635 A (OMRON TATEISI ELECTRONICS CO) 3 December 2020 (2020-12-03) <br> * paragraph [0009] - paragraph [0064] * <br> * paragraph [0090] * <br> ----- | 1-5,7,8, 10-15 | |
| X | US 2014/207286 A1 (WANG YULUN [US] ET AL) 24 July 2014 (2014-07-24) <br> * paragraph [0193] * <br> * paragraph [0225] * <br> * paragraph [0241] * <br> ----- | 1-5,8, 12-15 | |

TECHNICAL FIELDS SEARCHED (IPC)

B25J
G05B

The present search report has been drawn up for all claims

| Place of search | Date of completion of the search | Examiner |
|---|---|---|
| The Hague | 11 May 2023 | De Santis, Agostino |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 1042

11-05-2023

| Patent document cited in search report | | Publication date | Patent family member(s) | | Publication date |
|---|---|---|---|---|---|
| US 2019193267 | A1 | 27-06-2019 | US 2019193267 | A1 | 27-06-2019 |
| | | | US 2023032490 | A1 | 02-02-2023 |
| JP 2020192635 | A | 03-12-2020 | EP 3978210 | A1 | 06-04-2022 |
| | | | JP 7226101 | B2 | 21-02-2023 |
| | | | JP 2020192635 | A | 03-12-2020 |
| | | | US 2022203538 | A1 | 30-06-2022 |
| | | | WO 2020240977 | A1 | 03-12-2020 |
| US 2014207286 | A1 | 24-07-2014 | CN 103459099 | A | 18-12-2013 |
| | | | CN 104898652 | A | 09-09-2015 |
| | | | EP 2668008 | A2 | 04-12-2013 |
| | | | JP 5905031 | B2 | 20-04-2016 |
| | | | JP 2014503376 | A | 13-02-2014 |
| | | | KR 20140040094 | A | 02-04-2014 |
| | | | KR 20180067724 | A | 20-06-2018 |
| | | | KR 20180118219 | A | 30-10-2018 |
| | | | US 9168656 | B1 | 27-10-2015 |
| | | | US 2012197439 | A1 | 02-08-2012 |
| | | | US 2012197464 | A1 | 02-08-2012 |
| | | | US 2014207286 | A1 | 24-07-2014 |
| | | | US 2015298317 | A1 | 22-10-2015 |
| | | | US 2016046021 | A1 | 18-02-2016 |
| | | | US 2017334069 | A1 | 23-11-2017 |
| | | | US 2019375102 | A1 | 12-12-2019 |
| | | | US 2022199253 | A1 | 23-06-2022 |
| | | | WO 2012103525 | A2 | 02-08-2012 |

EPO FORM P0459

For more details about this annex : see Official Journal of the European Patent Office, No. 12/82